(19) Europäisches Patentamt
European Patent Office
Office européen des brevets

(11) **EP 4 783 744 A1**

(12) **EUROPEAN PATENT APPLICATION**

(43) Date of publication:
29.07.2026 Bulletin 2026/31

(21) Application number: 25226874.3

(22) Date of filing: 23.12.2025

(51) International Patent Classification (IPC):
*H05B 45/22* (2020.01)    *H05B 47/175* (2020.01)
*G06V 20/60* (2022.01)    *G06V 10/00* (2022.01)

(52) Cooperative Patent Classification (CPC):
**H05B 47/1995; G06V 20/60; H05B 45/22;**
**H05B 47/1965;** H05B 47/198

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 23.01.2025  CN 202510104675

(71) Applicants:
• Shenzhen Intellirocks Tech. Co., Ltd.
Shenzhen, Guangdong 518055 (CN)

• Shenzhen Qianyan Technology Ltd.
Shenzhen, Guangdong 518055 (CN)

(72) Inventors:
• Lin, Peng
Shenzhen, 518055 (CN)
• WU, Wenlong
Shenzhen, 518055 (CN)

(74) Representative: Wang, Bo
Panovision IP
Ebersberger Straße 3
85570 Markt Schwaben (DE)

(54) **LAMP BEAD POSITION DETECTION METHOD, COMPUTER APPARATUS AND PROGRAM PRODUCT**

(57)    The present application relates to a lamp bead position detection method, a computer apparatus, and a computer program product. The method comprises: determining a sequence number of each lamp bead according to the total number of lamp beads in a lamp chain; applying recursive segmentation to the lamp chain according to the sequence number to obtain multiple segments, and controlling each segment to present a different apparent color from other segments; identifying spatial positions and apparent colors of light-emitting lamp beads in a captured image of the lamp chain, and determining sequence number ranges to which the light-emitting lamp beads in the image belong; determining a mapping relationship between a spatial position and the sequence number of each lamp bead according to a spatial positional relationship between adjacent lamp beads in the captured image and a sequence number relationship within the sequence number ranges to which they belong.

Figure 1

## Description

## TECHNICAL FIELD

This application relates to the field of lighting control, and particularly to a lamp bead position detection method, a computer apparatus, and a computer program product.

## BACKGROUND ART

With the continuous advancement of the intelligent lighting technology, lamp chains have evolved from conventional single-function lighting apparatuses into intelligent apparatuses that can be freely arranged according to user requirements to create diverse unique lighting effects. A user can control each lamp bead in the lamp chain via software to achieve personalized lighting effects. To realize such precise control, an accurate spatial layout of the lamp chain is required. The layout can describe both the serial position of each lamp bead in the lamp chain and the spatial position thereof in the physical space. However, correspondence matching between spatial positions and serial positions of the lamp beads remains a challenge in the industry.

Conventionally, to identify the matching relationship between the spatial positions and sequence numbers of the lamp beads, a method for assigning a light-emitting control sequence composed of multiple color codes to each lamp bead is generally adopted. Specifically, each lamp bead *per se* is identified by displaying a unique color-coded sequence, and an imaging unit captures images in the light-emitting process of the lamp beads. By analyzing these images, the identity of each lamp bead, i.e., sequence number thereof, and the position thereof in the image space are determined. This manner suffers from some significant problems, such as susceptibility to errors in identifying colors and sequence numbers of lamp beads, inefficiency when processing a large number of lamp beads, and poor scalability.

These problems limit the application of intelligent lamp chain products in diverse scenarios, especially in occasions where it is necessary to rapidly and accurately match the positions of lamp beads with the sequence numbers thereof. Therefore, there is an urgent need for a new technical solution to overcome the defects of the prior art, so as to improve the accuracy and efficiency in matching the positions of lamp beads with the sequence numbers thereof, while simplifying operations and reducing the risk of errors.

## SUMMARY OF THE INVENTION

The invention is set out in the appended set of claims.

According to one aspect of this application, there is provided a lamp bead position detection method, comprising: sorting lamp beads according to the total number of the lamp beads in a lamp chain, and determining a sequence number of each lamp bead; applying recursive segmentation to the lamp chain according to the sequence number to obtain sequence number ranges of lamp beads correspondingly covered by multiple segments, and after each segmentation, controlling each segment obtained from the current segmentation to present a different apparent color through the lamp beads from other segments; identifying spatial positions and apparent colors of light-emitting lamp beads in a captured image of the lamp chain as correspondingly acquired in each segmentation, and determining sequence number ranges to which the light-emitting lamp beads in the image belong, according to the segment to which the apparent colors belong; determining a mapping relationship between a spatial position and the sequence number of each lamp bead according to a spatial positional relationship between adjacent lamp beads in the captured image and a sequence number relationship within the sequence number ranges to which they belong.

According to another aspect of this application, there is provided a computer apparatus, comprising a central processing unit and a memory, wherein the central processing unit is configured to call and run computer programs stored in the memory to execute steps of the above-mentioned lamp bead position detection method.

According to another aspect of this application, there is provided a computer program product, comprising computer programs or computer instructions, wherein when the computer programs or the computer instructions are called and run by a central processing unit, steps of the above-mentioned lamp bead position detection method are executed.

Compared with the prior art, this application has a wealth of beneficial effects. Through recursive segmentation, it significantly reduces the complexity of matching the positions of lamp beads with the sequence numbers thereof, and decreases the number of color variations that the system needs to process, thereby enhancing the accuracy and reliability of identification. When handling complex scenarios, recursive segmentation can gradually narrow down the identification range, effectively avoid identification errors caused by the uneven distribution of lamp beads in the traditional technology. Even when the lamp beads are closely arranged or irregularly distributed, it can also determine the position and sequence number of each lamp bead accurately. Moreover, the segmented processing greatly improves the efficiency of handling a large number of lamp beads, shortens the response time, and enables the system to better adapt to applications of real-time interaction. At the same time, this application has stronger scalability, and can flexibly adapt to an increase in the number of lamp beads and the complexity of lighting effects without the need for large-scale reconstruction of the entire system, reduce the workload, and enhance the compatibility and adaptability of the system. With these advantages, this application has significant practical application value and broad development prospects in the intelligent lighting field.

## BRIEF DESCRIPTION OF THE DRAWINGS

FIG. 1 is an electrical structure diagram of an exemplary ambient lamp apparatus according to this application;
FIG. 2 is a flow diagram of a lamp bead position detection method according to an embodiment of this application;
FIG. 3 is a structure diagram of a lamp bead position detection device according to an embodiment of this application;
FIG. 4 is a structure diagram of a computer apparatus according to an embodiment of this application.

## DETAILED DESCRIPTION

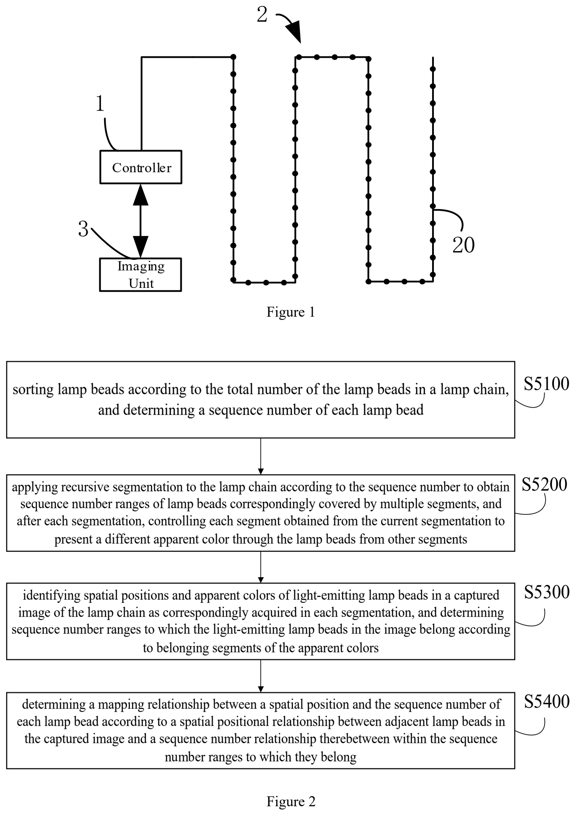

Referring to FIG. 1, as can be seen from the structure diagram of an ambient lamp apparatus provided by an embodiment of this application, the ambient lamp apparatus comprises a controller 1, a lamp chain 2, and an image acquisition interface. The lamp chain 2 is electrically connected to the controller 1 to work collaboratively under control of computer programs running in the controller 1, thereby playing lighting effects.

The controller 1 generally comprises a control chip, a communication assembly, and a bus connector. In some embodiments, the controller 1 can further be equipped with a power adapter, a control panel, and a display screen among others according to needs.

In the ambient lamp apparatus, the lamp chain 2 can be a lamp strip or a lamp string, which is flexible and can be molded into an arrangement layout in any shape. Each lamp chain 2 comprises multiple lamp beads 20 connected in series. Each lamp bead 20 serves as a light-emitting unit. Moreover, the lamp beads 20 in each lamp chain 2 can be equal in number and spaced evenly. Working current is transmitted to each lamp bead 20 in the same lamp chain 2 via the same set of cables connected to the bus. In terms of electrical connection relationship, the lamp beads 20 in the same lamp chain 2 can be connected with each other in parallel.

The image acquisition interface can be either a hardware interface or a software interface implemented in the controller 1. In case of hardware interface, the image acquisition interface can be implemented as an imaging unit 3. The controller 1 loads a corresponding driver program to drive the imaging unit 3 to operate. In one application, the imaging unit 3 can be used to capture images of the lamp chain to obtain on-site images required for determining the lamp chain spatial layout. The imaging unit 3 can be used to capture interface images required for generating lighting effect control data.

When the imaging unit 3 is aimed at a target scene, such as a display desktop of a terminal apparatus or a physical space environment, the interface images can be acquired by acquiring images at a certain frame rate. When the image acquisition interface is a software interface, it can be an image acquisition program implemented on the controller 1 side by virtue of the graphics infrastructure technology provided by the operating system of the terminal apparatus. The controller 1 is connected to the terminal apparatus via various cables, such as HDMI and Type-C connecting cables. With the support of the graphics infrastructure technology, the controller 1 can continuously obtain the interface images of the terminal apparatus. Of course, if a wireless screen-mirroring protocol is pre-established between the controller 1 and the terminal apparatus, the controller 1 can also obtain the interface images of the terminal apparatus via wireless communication.

As can be seen, when the image acquisition interface is responsible for capturing environmental reference images, the specific environment for capturing images can be flexibly set by the user. For example, when the image acquisition interface is the imaging unit 3, the user can aim the imaging unit 3 at the graphical user interface of a computer to acquire corresponding interface images as target images for playing lighting effects, so that the lamp chain 2 can generate corresponding lighting effect description data according to the interface images. The user can also aim the imaging unit 3 at a physical space environment, such as an outdoor environment, to record real-scene images as environmental reference images, so that the lamp chain 2 can generate lighting effect description data corresponding to the real scene.

When the ambient lamp apparatus is to play lighting effects according to the lighting effect description data, the controller 1 needs to rely on the lamp chain spatial layout to provide the sequence number and spatial position of each light-emitting unit in the lamp chain 2. According to the spatial position of each light-emitting unit, the corresponding lighting effect description data is parsed into control data of each light-emitting unit. Moreover, the control data of each light-emitting unit is encapsulated into lighting effect control data in the order of the sequence numbers. Subsequently, the lighting effect control data is sent to a corresponding lamp chain. The control chip of each light-emitting unit in the lamp chain extracts corresponding control data thereof and controls each light-emitting element therein to emit corresponding colored light according to the control data. Under the synergistic effect of the colored light emitted by each light-emitting unit, the entire lighting effect is played.

It is not difficult to understand that the computer apparatus of this application has a built-in imaging unit and a built-in graphical user interface, wherein the imaging unit 3 can be used to record on-site images to obtain preview images. Based on this, the lamp chain spatial layout is generated. The lamp chain spatial layout describes the mapping relationship between the sequence numbers of the lamp beads in the lamp chain and the spatial positions thereof in the image space corresponding to the physical space of the lamp chain. Based on this, the computer apparatus can also generate a corresponding lamp chain model according to the spatial position of each lamp bead in the lamp chain spatial layout and display the same on the graphical user interface, which facilitates the user editing the control data of each lamp bead in the lamp chain model to construct corresponding lighting effects. Then, the computer apparatus can convert the lamp beads in the lamp chain model into the lighting effect control data, which can be parsed by the control chip of each lamp bead in the lamp chain, according to the information provided by the lamp chain spatial layout and corresponding relationship between the spatial positions and sequence numbers thereof, for controlling the lamp chain to play corresponding lighting effects.

Referring to FIG. 2, in some embodiments, the lamp bead position detection method of this application is described by taking the computer apparatus to which the method is applied as a mobile terminal for example. The method comprises:

Step S5100: sorting lamp beads according to the total number of the lamp beads in a lamp chain, and determining a sequence number of each lamp bead; The total number of lamp beads in the lamp chain can be set manually or determined by querying according to the type of the lamp chain. According to the total number of lamp beads in the lamp chain, each lamp bead is numbered according to a certain rule, so as to assign a unique sequence number to each lamp bead. Herein, the "sequence number" refers to the order in which the lamp beads are arranged in the lamp chain, and they can be sorted in the order of natural numbers.

For example, if a lamp chain comprises 100 lamp beads, these lamp beads will be numbered sequentially from 1 to 100. The numbering rule can be simple linear sorting, i.e., starting from one end of the lamp chain, assigning an increasing sequence number to each lamp bead sequentially. The sorting manner is simple, intuitive, and easy to implement, and provides a clear basis for subsequent recursive segmentation.

Step S5200: applying recursive segmentation to the lamp chain according to the sequence number to obtain sequence number ranges of lamp beads correspondingly covered by multiple segments, and after each segmentation, controlling each segment obtained from the current segmentation to present a different apparent color through the lamp beads from other segments; The recursive segmentation is applied to the lamp chain according to the sequence number. Specifically, the lamp chain is divided into multiple segments according to the sequence numbers of the lamp beads. Each segment comprises lamp bead sequence numbers within a certain range, thus determining the sequence number range of each segment. After each segmentation operation, the lamp beads in each segment obtained from the current segmentation are controlled to present a different apparent color, or each segment is at least controlled to present a different apparent color relative to other segments, so as to facilitate subsequent identification and distinction. The apparent color is the color observable by human eyes and presented by the lamp beads that are emitting light or emitting no light.

For example, suppose a lamp chain comprises 100 lamp beads, these lamp beads are numbered sequentially from 1 to 100. These 100 lamp beads can be initially segmented into 5 segments, with every 20 lamp beads as one segment, and in these segments, the lamp beads have sequence number ranges of 1-20, 21-40, 41-60, 61-80, and 81-100, respectively. Then, the lamp beads of these 5 segments are controlled to display five different apparent colors: red, orange, yellow, green, and blue, respectively. In actual operation, as the mobile terminal sends control signals to the lamp beads, the lamp beads can be made to display preset colors.

The method of recursive segmentation can be further refined. Based on the initial segmentation, each segment can be segmented again. Taking the first segment (1-20) as an example, it can be further divided into two sub-segments, each comprising 10 lamp beads, with sequence number ranges of 1-10 and 11-20, respectively; these two sub-segments are controlled to display purple and pink, respectively. In this way, the number of lamp beads in each segment can be gradually reduced until a preset termination condition is met, e.g., the number of lamp beads in the segment is less than or equal to 2, or the preset maximum number of segmentations is reached.

During segmentation, the recursive segmentation refers to repeatedly segmenting the lamp chain according to a certain rule, with each segmentation being carried out on the basis of the resulting segments from the previous segmentation. Apparent color control refers to sending particular control signals from the mobile terminal to the lamp beads, causing the lamp beads that correspond to the sequence numbers covered by a corresponding segment to display a preset apparent color. A combination of these two technical means enables accurate identification and distinction of the position and sequence number of each lamp bead in a complex lamp bead layout.

Furthermore, the strategy of the recursive segmentation can be adjusted according to the actual application. For example, the number and size of segments in each segmentation can be determined according to a distribution density of the lamp beads, a shape of the lamp chain, or an expected identification accuracy. In some cases, only one or two segmentations may be needed to achieve the identification purpose; in other complex cases, multiple segmentations may be required. The flexibility enables the present method to adapt to various intelligent lamp chain products and different usage scenarios.

It should be noted that in the process of controlling the lamp beads in each segment to present a different apparent color, considering that the light emission control of each lamp bead in the lamp chain is generally implemented by providing a corresponding color value for each lamp bead, for lamp beads that do not need to emit light, information such as a null value will also be filled in for them. In this case, such lamp beads will not emit a color indicative of being powered on, and only display their physical true colors. According to this principle, the case that lamp beads do not use a color value to emit light should also be understood as a special apparent color achieved by the technical solution of using means such as null values to control the lamp beads not to emit light in this application. Based on this, in some embodiments, for a certain segment, a color value can be used to control it to emit light and display one color, while one or more other segments do not emit light and display their physical true colors, causing the former segment to present a different apparent color from the other multiple segments. The latter can be understood as using "dark colors". During identification of a segment controlled to emit light by using a color value, since the other segments use the "dark colors", it is less likely to interfere with the former, thereby improving the efficiency in identifying the former.

In one embodiment, for a lamp chain with a large number of lamp beads, such as one lamp chain with thousands of lamp beads, the sequence numbers of the lamp beads therein can be processed by interval grouping. For example, the first group is a bead group consisting of lamp beads with odd sequence numbers, and the second group is a bead group consisting of lamp beads with even sequence numbers. Then, the identification processing in this step featured with the recursive segmentation is applied to the two bead groups separately. The effect is the same as that achieved without grouping, as long as the interval relationship between the sequence numbers is handled properly. This approach can improve the identification efficiency by increasing the degree of parallelism.

Step S5300: identifying spatial positions and apparent colors of light-emitting lamp beads in a captured image of the lamp chain as correspondingly acquired in each segmentation, and determining sequence number ranges to which the light-emitting lamp beads in the image belong, according to the segment to which the apparent colors belong;

In this step, it is necessary to carry out acquisition and analysis of captured images of the lamp chain, in order to identify the spatial positions and apparent colors of the light-emitting lamp beads in the captured images of the lamp chain at different segmentation stages through the captured images, and on this basis, determine the sequence number ranges to which the light-emitting lamp beads in the images belong.

First, an imaging unit is used to acquire captured images of the lamp chain at different segmentation stages. The imaging unit can be a camera of a mobile terminal or a dedicated image acquisition apparatus. During image acquisition, it should be ensured that the parameter settings (such as exposure and aperture) of the imaging unit can optimize the effect in identifying the lamp beads. For example, the exposure or aperture can be adjusted to ensure that the brightness of the lamp beads is clear enough while avoiding color distortion caused by overexposure.

Next, the spatial position of each light-emitting lamp bead in the image and the apparent color displayed thereby are identified in the captured image. This can be realized through an image processing technology. In one embodiment, functions in OpenCV library are used for image analysis. Specifically, the image can be first subjected to pre-processing, which includes such operations as grayscale conversion and binarization, so as to highlight the light-emitting contours of the light-emitting lamp beads and determine selection boxes corresponding to the light-emitting contours thereof and corresponding region images. Then, by using color identification algorithms, such as color threshold segmentation based on HSV color space, the apparent colors of the lamp beads are identified through the region images of the light-emitting lamp beads. For example, for red lamp beads, a particular HSV threshold range can be set, and pixels within that range in the image are identified as red lamp beads. In another embodiment, an image target identification model implemented on the basis of a foundation model like Yolo can be used for specialized pre-training. Then, through the image target identification model, reasoning is performed on the captured image to obtain the selection box of the region image of each light-emitting lamp bead, and then calculation is performed according to the pixel value of the region image to determine the apparent color. Since they can be obtained in all these embodiments, the selection boxes actually provide the spatial positions of the light-emitting lamp beads in the captured image. In a typical embodiment, the geometric center positions of the selection boxes can be taken as the specific spatial positions of the light-emitting lamp beads.

According to the apparent colors of the light-emitting lamp beads in the captured image, each light-emitting lamp bead is classified into a corresponding segment. Since the lamp beads of each segment are controlled to present different apparent colors in the segmentation step, which segment the lamp beads belong to can be determined by identifying the apparent color of the lamp beads, and the sequence number range thereof can be further determined. For example, if a red lamp bead is identified in the captured image and red represents the first segment (1-20) according to the segmentation control, then it can be determined that the sequence number of this lamp bead is between 1 and 20.

Furthermore, to improve the accuracy of the identification, a combination of various kinds of image identification techniques can be employed. For example, in addition to color identification, methods such as shape identification and brightness analysis can be combined. In terms of shape identification, the circular feature of the lamp beads can be utilized, and circular contours in the image are detected to assist in identifying the lamp beads. In terms of brightness analysis, feature equilibrium attributes such as the brightness range, radius, and circular approximation of the lamp beads can be calculated to further confirm the positions and colors of the lamp beads.

In practical applications, some special situations such as color interference between lamp beads and the influence of ambient light can be handled in a combinative manner. To address these problems, some advanced image processing techniques such as adaptive binarization, contour identification, and feature extraction can be employed. For example, adaptive binarization can better adapt to images under different lighting conditions, and improve the identification rate of lamp beads. Through contour identification, the boundaries of lamp beads can be positioned accurately, and accurate identification can be realized even in the case of partial overlap between lamp beads. Feature extraction enables quantitative analysis of features such as the shape, color, and brightness of lamp beads, thereby improving accuracy and reliability of the identification.

As each segment usually contains multiple lamp beads, and multiple light-emitting lamp beads are identified in the captured image corresponding to this segment, in this case, correlation has not been established between the spatial position of each lamp bead in the same segment in the captured image and the logical sequence number thereof, and the correspondence matching has not been achieved; thus, further processing in subsequent steps is required.

Step S5400: determining a mapping relationship between a spatial position and the sequence number of each lamp bead according to a spatial positional relationship between adjacent lamp beads in the captured image and a sequence number relationship therebetween within the sequence number ranges to which they belong.

By determining the mapping relationship between the spatial position and sequence number of each lamp bead, the correspondence matching between the sequence numbers and spatial positions of the lamp beads can be realized. This cannot be done without reasoning based on the spatial positional relationship between adjacent lamp beads in the captured image and the sequence number ranges to which they belong. Specifically, the spatial position of each lamp bead in the captured image is first obtained, and the spatial position is obtained through the image processing techniques as revealed above.

Since step S5300 is subjected to processing in segments according to the principle of recursion, the granularity of the last segmentation is the smallest, and can reach the level of one or two lamp beads. At this point, when the recursive segmentation is carried out at the smallest granularity, for example, when each segment comprises only one lamp bead, the spatial position and sequence number thereof must be uniquely matched; in the case of two lamp beads, the correspondence matching relationship therebetween can be determined by comparing the spatial position and sequence number relationships between these two lamp beads and adjacent lamp beads that have already been matched. For example, if the sequence numbers of the lamp beads in the adjacent segments are known to be 15 and 18 and the two lamp beads of the current segment are located between these two known lamp beads, then based on the proximity relationship thereof in the captured image, it can be inferred that the sequence numbers of these two lamp beads are 16 and 17. Since the spatial positions of these two lamp beads have already been determined, the correspondence matching thereof can be realized by directly mapping the sequence number and spatial position of each lamp bead.

Through recursive backtracking, the correspondence matching relationship of the lamp beads in a parent segment can be inferred according to the correspondence matching relationships of the sub-segments thereof. Once the matching relationship of the lamp beads at the smallest granularity is determined, upward backtracking can be performed to gradually determine the matching relationship of the lamp beads in larger segments. This process is similar to building a decision tree, i.e., deducing from leaf nodes (segments at the smallest granularity) upwards to the root node (the entire lamp chain). For a parent segment, if there are still missing lamp beads among its sub-segments that have already been matched, likewise, corresponding inference can be performed to determine the matching relationship between the sequence numbers and spatial positions of the missing lamp beads.

In other words, for each segment, in addition to using the lamp beads at the smallest granularity for matching, some lamp beads that have already been matched can also be used to deduce the correspondence matching relationship between the sequence numbers and spatial positions of lamp beads to be identified. For example, if the sequence numbers and spatial positions of some lamp beads in a segment are known, the sequence numbers of the lamp beads to be identified can be inferred by analyzing the spatial distance and arrangement order between the lamp beads to be identified and these known lamp beads. This method is particularly effective when dealing with situations where some lamp beads cannot be directly identified due to occlusion or failure.

Multiple embodiments can be used to realize determination of this mapping relationship. For example, when there is a large number of lamp beads with known spatial positions in a segment, valid lamp beads can be directly verified by comparing the relative spatial positions between the lamp beads, and the sequence numbers and spatial positions thereof are further determined, so as to realize the correspondence matching. If there are a small number of lamp beads with known spatial positions in a segment, a method of linear fitting can be used, and the spatial positions and sequence numbers of unknown lamp beads can be predicted according to the spatial positions and sequence numbers of the lamp beads that have already been matched, so as to realize the correspondence matching. Additionally, in combination with features such as the brightness and color of the lamp beads, the accuracy of the matching can be improved through machine learning algorithms.

For the lamp beads that have already been matched, the data on the mapping relationship between the spatial positions and sequence numbers thereof can be added to a mapping relationship table. After this mapping relationship table is finalized, it can be used for the lamp chain spatial layout and serve as the basis for interpreting lighting effects, so that the lamp chain can parse and play lighting effects according to the lamp chain spatial layout.

In some embodiments, after completing the entire recursive process, the spatial positions and sequence numbers of the lamp beads in the mapping relationship table can be constructed as representation vectors. Then, clustering algorithms such as K-means or DBScan can be used to cluster these representation vectors. After clustering, the lamp beads corresponding to outlier representation vectors are excluded. Then, whether the mapping relationship data of the lamp beads in the mapping relationship table is complete is checked comprehensively. When it is incomplete, Step S5400 can be repeated to re-infer the spatial positions of the missing lamp beads, finally determine their corresponding sequence numbers, and establish the correspondence matching relationship between the spatial positions and sequence numbers. Finally, construction of the entire mapping relationship table is completed. This helps reduce the error rate of lamp bead matching and improve the accuracy rate.

In other embodiments, the spatial positions of lamp beads that suffer from matching errors can also be excluded by detecting whether the straight-line distances between adjacent lamp beads in the mapping relationship table satisfy a preset statistical distance. Then, likewise, Step S5400 is reapplied to infer the missing lamp beads, and finally, the construction of the mapping relationship table is perfected.

As can be learned from the above embodiments, compared with the prior art, this application demonstrates significant advantages in multiple aspects, including but not limited to:

first, this application adopts a method of recursive segmentation, processes the lamp chain into segments according to the sequence numbers of the lamp beads; after each segmentation, each segment is controlled to present a different apparent color, so as to effectively reduce the complexity of the identification; this is because in each segmentation step, only the lamp beads in the current segment need to be focused on, rather than the entire lamp chain; compared with the prior art that requires defining a unique color-coded sequence for each lamp bead, this greatly reduces the number of color changes that need to be processed, thereby reducing the difficulty in implementation and the possibility of errors;

second, this application is excellent in handling complex scenario; through recursive segmentation, even if the lamp beads are arranged in a nonlinear or irregular manner, e.g., they are wound, overlapped, or closely adjacent, the identification scope can be gradually narrowed down, and ultimately, the position and sequence number of each lamp bead can be determined accurately; this is because after each segmentation, the distribution of lamp beads in each small segment can be analyzed in greater detail, so as to avoid identification errors caused by uneven distribution of lamp beads in the prior art;

furthermore, this application significantly improves the efficiency in handling a large number of lamp beads; since the processing in segments is adopted, the computational load no longer increases sharply with the increase in the number of lamp beads; after each segmentation, only the lamp beads in the current segment need to be processed, which significantly reduces the response time and improves the real-time performance;

additionally, this application has stronger scalability; since the method of recursive segmentation is adopted, when more lamp beads need to be added to the existing lamp chain system or more complex lighting effects need to be introduced, adjustments can be made flexibly without redefining the color-coded sequences of all the lamp beads, which not only reduces workload but also improves the compatibility and adaptability of the system.

Based on any embodiment of the method in this application, said applying recursive segmentation to the lamp chain according to the sequence number to obtain sequence number ranges of lamp beads correspondingly covered by multiple segments, and after each segmentation, controlling each segment obtained from the current segmentation to present a different apparent color through the lamp beads from other segments comprises:

Step S5230: dividing lamp beads of a target segment in the lamp chain into multiple segments according to the sequence number, and assigning a distinct apparent color to each segment;
The target segment is determined according to the sequence number range input by a recursive function. It can be a range covering all the lamp beads of the entire lamp chain, and can also be a range of a certain segment after segmentation or a range determined after interval grouping. To facilitate recursion, the recursive function can internally perform independent sequential numbering on the input sequence number range. Alternatively, in the absence of independent numbering, the grouping interval number needs to be specified to clarify the change relationship between adjacent sequence numbers according to the grouping interval number for subsequent calculations.

Thus, determining the target segment is determining the part of the lamp chain, which part currently needs to be processed in segments. The target segment can be the entire lamp chain or a certain segment obtained after the previous segmentation. For example, if the lamp chain has a total of 100 lamp beads, numbered 1 to 100, then the initial target segment is these 100 lamp beads.

Next, based on the preset number of segments, lamp beads of the target segment are divided into multiple sub-segments according to the sequence numbers. The basis for division can be equal division, or unequal division according to the distribution density of the lamp beads or other specific rules. For example, the target segment can be divided equally into two sub-segments. If the target segment is lamp beads 1 to 100, it can be divided into two sub-segments: 1 to 50 and 51 to 100. Alternatively, if the lamp beads are densely distributed in certain regions, the number of sub-segments therein can be increased appropriately.

A different apparent color is assigned to each sub-segment, and these colors are used to distinguish different segments in subsequent steps. The selection of colors should ensure that they can be clearly distinguished in the captured image. For example, basic colors such as red, green, and blue can be used, or more complex color combinations such as purple and pink can be used. The assignment of colors can be predefined or dynamically generated, as long as it is ensured that the color of each sub-segment is unique.

Step S5240: according to the apparent color of each segment obtained from the current division, controlling each lamp bead of a corresponding segment in the lamp chain to emit an apparent color assigned to the segment for capturing the captured image;
Each lamp bead of the corresponding segment in the lamp chain is controlled to emit a preset apparent color. Each segment can be distinguished by different apparent colors. The captured image of the lamp chain is acquired in the light-emitting state of these segments, and can be used to identify the spatial positions of the light-emitting lamp beads in the captured image.

For each segment obtained from each recursive division, according to the apparent color of each segment obtained from the current division, the lamp beads of the corresponding segment in the lamp chain are instructed to emit the specified color by sending control signals to the lamp chain. For example, this can be done as an exemplary mobile terminal sends a corresponding control instruction to the lamp chain. The control instruction should include the sequence numbers and apparent colors of the lamp beads of each segment. When the lamp chain receives the control instruction, it can control the corresponding lamp beads to emit the specified apparent color according to the specified sequence numbers.

In an embodiment, if red is assigned to a segment, then all the lamp beads in the segment will be controlled to display red. This can be achieved by sending a control instruction that includes color codes to the lamp beads. The color code can be a predefined color index or a specific RGB value. For example, red can be represented by the RGB value (255, 0, 0), and this value will be sent to the specified lamp beads, and cause them to emit red light.

On the other hand, after the control instruction is sent out, the imaging unit can be automatically called to acquire captured images of the lamp chain through the imaging unit, which serve as the basis for identifying the spatial positions of the lamp beads in Step S5300.

Step S5250: detecting whether each segment obtained from the current segmentation meets a preset termination condition, and if not, taking the current segment currently under detection as a next target segment and iterating the above process to continue the recursive segmentation, wherein the termination condition is that either all lamp beads in the current segment are suitable for determining the spatial positions and sequence numbers thereof to realize correspondence matching, or the number of lamp beads in the current segment is less than or equal to two.

The recursive process requires a preset termination condition to ensure that the segmentation operation stops at an appropriate time, thereby avoiding infinite recursion. In this application, the termination condition can include one or two of the following conditions: first, all lamp beads in the current segment are suitable for determining the correspondence matching relationship between the spatial positions and sequence numbers thereof; second, the number of lamp beads in the current segment is reduced to one or two. These two conditions ensure that the process of recursive segmentation can be sufficiently refined to the degree where the spatial position and sequence number of each lamp bead can be identified accurately while calling a halt in time upon reaching the sufficient precision to avoid unnecessary calculations and resource waste.

After each segmentation, whether each newly generated segment meets the above-mentioned termination condition is detected automatically. If the number of lamp beads in a newly generated segment, as the current segment, is reduced to one or two, then this segment will not be segmented any more. For example, if a segment only has two lamp beads left in the final-level segment thereof after multiple recursive segmentations, then these two lamp beads will directly undergo matching between the spatial positions and sequence number thereof without further segmentation. This is because when there are a small number of lamp beads in a segment, the relationship between the sequence numbers and positions thereof can be determined through simple comparison and inference, without the need for complex segmentation operations.

On the other hand, if the matching relationship between the spatial positions and sequence numbers of all the lamp beads can be accurately inferred through the current segmentation information in a certain segmentation step, then the recursive segmentation process of this segment will also come to a halt. For example, if, after a segmentation, the lamp beads in a segment is uniform in distribution and clearly distinct in position and color from those of adjacent segments, and the number of light-emitting lamp beads detected in the captured image corresponds one-to-one with the number of lamp beads defined by the sequence number range of the current segment, then it can be considered that the positions and sequence numbers of the lamp beads in this segment can be determined accurately, without the need for further segmentation.

If the termination condition is not met, the segment currently under detection will be taken as the target segment in the next recursive segmentation, and the above process of segmentation and color control will be continued. This process will repeat until all the segments meet the termination condition. For example, if a segment still comprises a large number of lamp beads after the first segmentation and the position and sequence number of each lamp bead cannot be directly determined, then this segment will be divided again into smaller segments, and different apparent colors will be assigned to each new segment, so as to continue the recursive segmentation.

In this way, the recursive segmentation process can flexibly adapt to lamp bead layouts of different complexities, which ensures both the identification accuracy in complex scenarios and the processing efficiency in simple scenarios. This method fully utilizes the advantages of recursive algorithms, gradually narrows down the identification scope by gradually refining the segmentation, and ultimately realizes accurate matching between the position and sequence number of each lamp bead.

By executing the above embodiments, the significant technical advantages achieved by this application are mainly reflected in the following aspects. First, through the method of recursive segmentation, the complex problem of the lamp bead layout can be broken down into multiple smaller, more manageable sub-problems. This method not only reduces the complexity of the problem but also enables each sub-problem to be processed independently, thereby improving the processing efficiency and accuracy of the entire system. Second, the preset termination condition ensures the timely stop of the recursive process, thereby avoiding unnecessary calculations and resource waste, and further improving the efficiency of the system. Additionally, by assigning different apparent colors to each segment, not only is the distinguishability between lamp beads enhanced, but also an intuitive basis is provided for subsequent matching between the spatial positions and the sequence numbers, so as to further improve the accuracy and reliability of matching. Finally, the flexibility of this method enables adaption to lamp bead layouts of various complexities. Whether it is a simple linear layout or a complex nonlinear layout, accurate identification and matching can be realized through gradual refinement of segmentation, so as to improve the universality and applicability of the system. In summary, through the technical advantages achieved by the above embodiments, this application not only improves the efficiency and accuracy in matching positions of lamp beads with sequence numbers thereof, but also enhances the flexibility and adaptability of the system, thereby providing strong technical support for the development and application of intelligent lamp chain products.

Based on any embodiment of the method in this application, before dividing lamp beads of a target segment in the lamp chain into multiple segments according to the sequence number, the method comprises:

Step S5210: grouping the sequence numbers of the lamp beads in the lamp chain according to a preset interval rule, and obtaining a sequence number set that correspond to each group;
The sequence numbers of the lamp beads in the lamp chain are grouped according to a preset interval rule. Herein, the "interval rule" refers to dividing the sequence numbers of the lamp beads into different groups according to a certain pattern. For example, lamp beads with odd sequence numbers can be put into one group, and lamp beads with even sequence numbers into another group. The grouping method is simple, intuitive, and easy to implement, and ensures that the number of lamp beads in each group is roughly equal, which provides a good foundation for subsequent parallel processing. In addition to odd-even grouping, grouping can also be performed according to other rules, e.g., the grouping interval can be determined according to the distribution density of the lamp beads, the shape of the lamp chain, or the expected identification accuracy. For example, if the lamp beads are densely distributed in certain regions, the number of groups in these regions can be appropriately increased to improve the accuracy of the identification.

Step S5220: for each group, launching a corresponding thread configured to receive the sequence number set of lamp beads in each group and the interval rule, the thread taking a corresponding group as the target segment, and applying recursive segmentation to the target segment.

Next, a corresponding thread is launched for each group. Each thread is responsible for processing lamp beads in one group, takes the sequence number set of lamp beads in the group and the interval rule, e.g., in the form of a grouping interval number, as input, and applies recursive segmentation to this group as the target segment. The parallel processing can fully utilize the multi-core processor resources of modern computers. Each thread can independently perform segmentation and color control operations, thereby speeding up the entire process of detecting positions of lamp beads. For example, if there are 1000 lamp beads in the lamp chain, after odd-even grouping, each group has 500 lamp beads. One thread is launched for each group, and each thread deals with the recursive segmentation of 500 lamp beads separately, which can halve the processing time.

In implementing recursive segmentation, each thread operates in the same recursive method as described above. That is, the lamp beads of the target segment are divided into multiple sub-segments according to the sequence numbers, and a different apparent color is assigned to each sub-segment. Then, each lamp bead of a corresponding segment in the lamp chain is controlled to emit the apparent color assigned to the segment, so as to acquire the captured image. Finally, whether each segment obtained from the current segmentation meets the preset termination condition is detected. If not, recursive segmentation is continued until all the segments meet the termination condition.

By executing the above embodiments, the significant technical advantages achieved by this application are mainly reflected in the following aspects. First, by grouping the sequence numbers of the lamp beads according to a preset interval rule, a large-scale lamp bead dataset can be effectively broken down into multiple smaller, more manageable subsets. The processing reduces the density of lamp beads in each group, helps to reduce color mixing interference between light-emitting lamp beads, and improves the accuracy of the identification. The grouping strategy not only simplifies the complexity of data processing, but also provides a foundation for subsequent parallel processing, so that each group can be processed independently, which improves the processing efficiency. Second, a corresponding thread is launched for each group to perform recursive segmentation processing, which fully utilizes the multi-core processor resources of modern computers, and achieves parallel computing. The parallel processing significantly reduces the processing load on a single thread, speeds up the lamp bead position detection, and improves the response time. Additionally, since each thread independently processes one group, the dependency between threads and the synchronization overhead are reduced, and the stability and reliability of the system are further improved. Finally, the strategy based on grouping and parallel processing has good scalability and can adapt to lamp chain systems of different scales. Regardless of the scale of the lamp chain, performances can be optimized by appropriately adjusting the grouping rules and the number of threads, so as to meet needs of different applications.

Based on any embodiment of the method in this application, said identifying spatial positions and apparent colors of light-emitting lamp beads in a captured image of the lamp chain as correspondingly captured in each segmentation, and determining sequence number ranges to which the light-emitting lamp beads in the image belong according to the segment to which the apparent colors belong comprises:

Step S5310: using an imaging unit to acquire the captured image of the lamp chain at different segmentation stages, wherein lamp beads of each segment in the captured image display an apparent color assigned to the segment;

By using the imaging unit, images of the lamp chain are acquired at different segmentation stages. In these images, the lamp beads of each segment display an apparent color corresponding to the segment, which provides a foundation for subsequent image analysis and lamp bead identification.

The imaging unit can be pre-called to obtain preview images of the lamp chain through the cooperative operation of the user. Then, the computer program pre-implemented by this application identifies corresponding high-definition image frames, in which the apparent color switches, from the preview images as captured images. Each switch in apparent color actually corresponds to sending an apparent color control instruction to the lamp chain after each segmentation. The relationship can be utilized to delay a preset duration to complete driving the light emission in cooperation with the lamp chain after every time the control instruction is issued, so as to extract the captured image corresponding to each switch. These captured images are constructed into an image sequence, and subsequent identification of light-emitting lamp beads can be performed on the basis of the image sequence.

To ensure that the captured images accurately reflect the state of the lamp beads, parameters of the imaging unit include exposure, aperture size, ISO sensitivity, etc., and collectively influence the quality of the images and the identification effect of the lamp beads. Such parameters can be preset or dynamically adjusted to obtain high-quality images.

Step S5320: identifying, from the captured image, the spatial position of each light-emitting lamp bead in the captured image and the apparent color displayed thereby;

Identifying the spatial position and apparent color of each light-emitting lamp bead in the captured image is critical to realizing the lamp bead position detection. This can be achieved in two main technical approaches: one is an image processing method based on OpenCV library functions, and the other is a method based on a pre-trained image target identification model. Both of the methods have their own advantages and can be chosen according to specific applications and needs.

OpenCV provides a wealth of image processing functions that can be used for image pre-processing, feature extraction, and object identification. In an embodiment, OpenCV functions can be used to perform pre-processing operations such as grayscale conversion, binarization, and edge detection on the captured image, so as to enhance the features of the lamp beads in the image. Then, through contour detection functions, the contour of each light-emitting lamp bead in the image is identified, so as to determine the spatial position thereof in the captured image. Additionally, color space conversion functions can be used to convert the image from the RGB color space to the HSV color space, so as to more accurately identify the apparent colors of the lamp beads. By setting a particular color threshold, in the image, pixels that fall within a particular color range can be identified as lamp beads in the corresponding color.

The method based on a pre-trained image target identification model is a technique based on deep learning. The method first requires collecting a large amount of image data annotated with positions and colors of lamp beads, then uses the data to train an image target identification model, such as a model based on a Convolutional Neural Network (CNN). The well-trained model can automatically learn the features of lamp beads in the image and identify the spatial position and apparent color of each light-emitting lamp bead in a given captured image. In practical applications, the captured image is input into the well-trained model, and the model outputs the position coordinate and color label of each lamp bead in the image. The advantage of the method is that it can process complex image backgrounds and variations in the lamp bead shape, and is high in identification accuracy and robustness.

When identifying the spatial positions of light-emitting lamp beads, the center point coordinates of each lamp bead can be taken as the representative of the spatial position thereof. Through the above two methods, the center point coordinates of each light-emitting lamp bead can be accurately determined in the captured image, which provides precise data support for subsequent matching between positions and sequence numbers of lamp beads.

Step S5330: according to the apparent colors of the light-emitting lamp beads in the captured image, classifying each light-emitting lamp bead into a corresponding segment, and determining that the sequence number of the light-emitting lamp bead belongs to a sequence number range of the segment.

According to the apparent color of each light-emitting lamp bead identified in the captured image, these lamp beads can be classified. Since the lamp beads of each segment are controlled to present a different apparent color in the segmentation step, by identifying the apparent color of a lamp bead, which segment the lamp bead belongs to can be determined. For example, if a red lamp bead is identified in the captured image and red represents the first segment according to the segmentation control, then it can be determined that the lamp bead belongs to the first segment.

Next, it is determined that the sequence number of the light-emitting lamp bead belongs to the sequence number range of the segment. Since the sequence number range of lamp beads covered by each segment has been determined during segmentation, once a lamp bead is classified into a particular segment, the range where the sequence number thereof lies can be directly determined.

By executing the above embodiments, the significant technical advantages achieved by this application are mainly reflected in the following aspects. First, by using the imaging unit to capture images of the lamp chain at different segmentation stages, accurate basic data is provided for subsequent image analysis and lamp bead identification. The image acquisition method not only ensures the real-time performance and accuracy of the data, but also improves the image quality by optimizing the parameter settings of the imaging unit, thereby enhancing the effect in identifying the lamp beads. Second, by utilizing image processing methods based on OpenCV library functions and deep learning techniques based on pre-trained image target identification models, the high-precision identification of the spatial positions and apparent colors of light-emitting lamp beads is realized. The combination of these two methods not only improves the accuracy and robustness of the identification, but also can adapt to different applications and complex image backgrounds. Additionally, by classifying lamp beads into corresponding segments according to apparent colors and determining the sequence number ranges thereof, preliminary matching between the positions and sequence numbers of lamp beads is realized, which lays a solid foundation for the precise matching in the final. The process not only improves the efficiency of the matching, but also reduces the possibility of mismatches, thereby enhancing the overall performance of the system.

Based on any embodiment of the method in this application, said determining a mapping relationship between a spatial position and the sequence number of each lamp bead according to a spatial positional relationship between adjacent lamp beads in the captured image and a sequence number relationship within the sequence number ranges to which they belong comprises:

Step S5410: for each segment where the number of lamp beads is less than or equal to two, inferring the sequence numbers of the lamp beads and the spatial positions thereof in the captured image according to the sequence number relationship and the spatial positional relationship between the lamp beads and adjacent segments of the segment.

In the present embodiment, when the number of lamp beads in each segment is reduced to one or two, a particular strategy can be adopted to determine the mapping relationship between the spatial positions and sequence numbers of these lamp beads. The key to the strategy lies in utilizing the information of the lamp beads that have been matched in the known adjacent segments and inferring the specific positions and sequence numbers of the lamp beads in the current segment by analyzing the sequence number relationship and the spatial positional relationship.

Specifically, when the number of lamp beads in a segment is reduced to two, considering that the sequence number ranges of the adjacent segments of the segment are known and determined, the positions and sequence numbers of these two lamp beads can be determined by the sequence numbers at the ends of the sequence number ranges of the adjacent segments. For example, if the sequence numbers of adjacent lamp beads at the ends of the adjacent segments are 15 and 18, respectively, and the two lamp beads of the current segment are located between these two known lamp beads, then it can be inferred that the sequence numbers of the lamp beads in the current segment are 16 and 17. By analyzing the relative positions of these two lamp beads in the captured image, the specific spatial positions thereof can be further determined. If one lamp bead is closer to the lamp bead with the sequence number 15, then it can be matched as the lamp bead with the sequence number 16; conversely, if one lamp bead is closer to the lamp bead with the sequence number 18, then it can be matched as the lamp bead with the sequence number 17. When the number of lamp beads in a segment is one, since there is only one sequence number in the sequence number range of the segment, the spatial position and sequence number of the lamp bead are necessarily matched.

The effectiveness of the method lies in the fact that it utilizes the physical arrangement order of the lamp beads on the lamp chain and the known matching information, and can accurately determine the positions and sequence numbers of a small number of lamp beads through simple comparison and inference. This not only improves the efficiency of the identification, but also reduces errors that may occur when processing large amounts of data. Furthermore, the method does not require complex calculations or additional apparatuses, and only needs to use the existing image data and information of the matched lamp beads.

In practical applications, the inference method based on the adjacent relationship can be applied to various situations. For example, when a part of the lamp chain is blocked or damaged so that some lamp beads cannot be directly identified, the positions and sequence numbers of these lamp beads can be inferred by analyzing the information of the surrounding identifiable lamp beads. Likewise, when the layout of the lamp chain is complex, e.g., in the presence of bends or crossings, the method can also work effectively, since it relies on the relative positional relationship, rather than absolute coordinate positions.

Based on any embodiment of the method in the application, said determining a mapping relationship between a spatial position and the sequence number of each lamp bead according to a spatial positional relationship between adjacent lamp beads in the captured image and a sequence number relationship within the sequence number ranges to which they belong comprises:

Step S5420: for each segment, comparing the number of identified lamp beads that have their spatial positions determined in the captured image of the segment with the number of lamp beads that remain to be identified in the segment, and obtaining a comparison result;

For each segment, it is first necessary to compare the number of lamp beads that have their spatial positions determined in the captured image (the number of the identified lamp beads) with the number of lamp beads that should be included in the segment according to the division (the number of the to-be-identified lamp beads). The comparison process is to determine the identification status of the lamp beads in the current segment, so as to adopt a corresponding matching strategy.

Specifically, the number of the identified lamp beads refers to the number of lamp beads successfully identified in the captured image through image processing techniques (such as color identification and shape identification). The number of the to-be-identified lamp beads is the number of lamp beads that should theoretically be included in the segment according to the segment division. By comparing these two numbers, a comparison result can be obtained. The result can be characterized by subtracting the number of the identified lamp beads from the number of the to-be-identified lamp beads, and is used to guide subsequent matching operations.

For example, if the number of the to-be-identified lamp beads in a segment is 10, and the number of the identified lamp beads through image processing techniques in the captured image is also 10, it means that all the lamp beads in the segment have been successfully identified. In this case, the next matching operation can be carried out directly.

If the number of the identified lamp beads is less than the number of the to-be-identified lamp beads, it may indicate that some lamp beads are not identified in the captured image, possibly due to occlusion, damage, or other interference factors. In this case, particular methods need to be adopted to infer the positions of the missing lamp beads, e.g., information such as the average interval of known lamp beads is utilized.

Conversely, if the number of the identified lamp beads is larger than the number of the to-be-identified lamp beads, it may mean that in the captured image, there are lamp beads that do not belong to the current segment (which is caused by mirror reflection, for example), or the same lamp bead is identified repeatedly. In this case, it is necessary to analyze common features of the same segment (such as color consistency and distribution similarity) to exclude the redundant lamp beads.

Step S5430: when the comparison result shows that the number of the identified lamp beads equals the number of the to-be-identified lamp beads, establishing a one-to-one correspondence between the spatial position of each lamp bead that belongs to the segment in the captured image and each sequence number within a sequence number range of the segment;

When the number of the identified lamp beads in a segment in the captured image is the same as the number of lamp beads to be identified in the segment, it indicates that all the lamp beads in the segment have been successfully identified. In this case, a one-to-one correspondence between the spatial positions and sequence numbers of the lamp beads can be established directly. The processing ensures that the position information of each lamp bead can be accurately associated with the sequence number thereof, which provides precise data support for subsequent lighting effect control and layout planning.

During implementation, since the spatial position of each lamp bead in the captured image, i.e., the coordinates thereof in the captured image, has already been known in advance, the sequence number that each lamp bead in the segment should have can be known according to the sequence number range obtained during segment division. Next, according to the arrangement order of the lamp beads in the captured image, the spatial position of each lamp bead is matched with the corresponding sequence number. For example, if the number of the to-be-identified lamp beads in a segment is 10, and the number of the identified lamp beads through image processing techniques is also 10, then according to the order of the lamp beads from left to right or top to bottom in the image, the spatial position of the first identified lamp bead is matched with the sequence number 1, the second with the sequence number 2, and so on, until all the lamp beads are matched.

The method of one-to-one correspondence matching is simple and direct since it is based on the premise that all the lamp beads have been accurately identified and there are no missing or redundant identification results. In an ideal situation, this can quickly and accurately complete the matching task and is an important part of the lamp bead position detection procedures. However, in practical applications, various interference factors may be encountered, which leads to the situation that the number of the identified lamp beads is inconsistent with the number of the to-be-identified lamp beads. Therefore, in addition to the matching method under ideal conditions, corresponding strategies are needed to handle situations that lamp beads are missing or misidentified, so as to ensure the robustness and accuracy of the entire lamp bead position detection process.

Step S5440: when the comparison result shows that the number of the identified lamp beads is less than the number of the to-be-identified lamp beads by a difference that does not exceed a preset threshold value, inferring the spatial positions of missing lamp beads in the segment according to an average interval of all the already matched adjacent lamp beads, and establishing a one-to-one correspondence between the spatial position of each lamp bead that belongs to the segment in the captured image and each sequence number within the sequence number range of the segment;

When the number of the identified lamp beads in a segment in the captured image is less than the number of lamp beads to be identified in the segment, and the difference does not exceed a preset threshold, it indicates that some lamp beads may not be successfully identified in the captured image. The situation may be caused by various factors, such as blocked lamp beads, insufficient light, reflection interference, or other imaging issues. Under this situation, corresponding processing can be carried out as in the following embodiment.

First, the average interval between the identified lamp beads needs to be calculated. This can be achieved by measuring the center-to-center distance between adjacent identified lamp beads in the captured image. For example, if the coordinates of the identified lamp beads in the image are (x1, y1) and (x2, y2), respectively, then the distance d therebetween can be calculated by using the Euclidean distance formula:

$$d=\sqrt{(x2-x1)^2+(y2-y1)^2}$$

After calculating the distances between all pairs of adjacent identified lamp beads, the average thereof is taken as the average interval.

Next, the average interval is used to infer the spatial positions of missing lamp beads. Suppose two adjacent identified lamp beads A and B are known, and based on the average interval, it is inferred that there should be a missing lamp bead C between these two lamp beads. If the spatial position of the lamp bead A is (xA, yA) and the spatial position of the lamp bead B is (xB, yB), then the position of the missing lamp bead C can be estimated by linear interpolation. For example, if the lamp beads A and B are on a straight line, and the missing lamp bead C should be located in the middle of A and B, then the position of C can be estimated as:

$$(xC,yC)=(\frac{xA+xB}{2},\frac{yA+yB}{2})$$

Additionally, the arrangement pattern of the lamp beads can be considered to further improve the accuracy of the inference. For example, if the lamp beads are arranged according to a certain geometric pattern (such as circle and spiral), the property of the pattern can be used to adjust the estimation of the position of missing lamp beads. For lamp beads arranged in a circle, the spatial position thereof can be determined by calculating the circle center and radius of the identified lamp beads and then using the expected angular positions of the missing lamp beads.

After the spatial positions of the missing lamp beads are determined, the number of the to-be-identified lamp beads in the segment becomes consistent with the number of the identified lamp beads, and the correspondence matching between the spatial position and sequence number of each lamp bead within the sequence number ranges of the segment can be realized in the manner revealed in Step S5430. For example, if the number of the to-be-identified lamp beads in a segment is 10 and the number of the identified lamp beads is 8, then the correspondence matching of 10 lamp beads can be realized according to the arrangement order of the lamp beads in the captured image after the positions of 2 missing lamp beads are inferred in the above method.

It should be noted that in the situation that as shown by the step comparison result, the difference by which the number of the identified lamp beads is less than the number of the to-be-identified lamp beads exceeds the preset threshold, segmentation can be continued to gradually subdivide the problem and infer the missing lamp beads in the sub-segments.

The advantage of the method is that the positions of missing lamp beads can be inferred on the basis of known information when some lamp beads cannot be directly identified, so as to realize complete matching between the positions and sequence numbers of lamp beads. This not only improves the robustness of lamp bead position detection but also ensures that accurate lamp bead layout information can be obtained even under imperfect imaging conditions.

Step S5450: when the comparison result shows that the number of the identified lamp beads is greater than the number of the to-be-identified lamp beads, excluding redundant lamp beads from the segment in the captured image according to common features of the same segment, and establishing a one-to-one correspondence between the spatial position of each lamp bead that belongs to the segment in the captured image and each sequence number within the sequence number range of the segment.

When the number of the identified lamp beads in a segment in the captured image is greater than the number of the to-be-identified lamp beads in the segment, it indicates that in the captured image, there may be lamp beads not belonging to the current segment, or the same lamp bead is repeatedly identified. The situation may be caused by various factors, such as mirror reflection, image processing errors or other interference factors. Under this situation, corresponding processing can be carried out as in the following embodiment.

First, it is necessary to analyze common features of the same segment to identify and exclude redundant lamp beads. The common features of the same segment refer to common features that all the lamp beads in the current segment should possess. These features can include color consistency, distribution similarity, shape similarity, etc. For example, if all the lamp beads in a segment should display the same color, then any lamp bead that presents a different color can be considered redundant. Likewise, if the lamp beads should be distributed in a segment according to a certain pattern, such as uniform distribution or a particular geometric arrangement, then any lamp bead that does not conform to the pattern can also be identified as redundant.

During implementation, the following embodiments can be used to exclude redundant lamp beads.

The first embodiment can perform detection by utilizing the color consistency: the apparent color of each lamp bead in the captured image is analyzed and compared with the preset apparent color of the segment. If the color of a certain lamp bead significantly differs from the preset color, it can be identified as a redundant lamp bead and excluded. For example, if all the lamp beads of a segment should display red and a blue lamp bead appears in the captured image, then the blue lamp bead can be excluded.

The second embodiment can carry out analysis by utilizing the distribution similarity: the average interval between the identified lamp beads is calculated and whether each lamp bead conforms to the distribution pattern is checked. If the position of a certain lamp bead significantly deviates from the expected distribution pattern, it can be identified as a redundant lamp bead and excluded. For example, if the lamp beads of a segment should be uniformly distributed, and the calculated average interval is 50 pixels, but the distance between a certain lamp bead and its adjacent lamp bead is significantly less than or greater than 50 pixels, then the lamp bead can be excluded.

The third embodiment can perform verification by utilizing the shape similarity: the shape of each lamp bead in the captured image is analyzed and compared with the standard shape of lamp beads. If the shape of a certain lamp bead significantly differs from the standard shape, it can be identified as a redundant lamp bead and excluded. For example, if the standard shape of lamp beads is circular, but a "lamp bead" in an elliptical shape appears in the captured image, then the elliptical "lamp bead" can be excluded.

After excluding redundant lamp beads, when the number of the identified lamp beads is equal to the number of the to-be-identified lamp beads, a one-to-one correspondence can be established between the spatial position of each lamp bead that belongs to the segment in the captured image and each sequence number within the sequence number range of the segment. Specifically, referring to the manner revealed in S5430, the spatial position of each lamp bead is matched with the corresponding sequence number according to the arrangement order of the lamp beads in the captured image.

The advantage of this method is that in the case of misidentification or redundant identification, erroneous lamp beads can be identified and excluded by analyzing the common features of the same segment, so as to ensure the accuracy and completeness of the result from the matching between the positions and sequence numbers of lamp beads. This not only improves the robustness of lamp bead position detection but also ensures that accurate lamp bead layout information can be obtained even under complex imaging conditions.

By executing the above embodiments, the comprehensive technical advantages achieved by this application are mainly reflected in the following aspects. First, by comparing the number of the identified lamp beads in the captured image with the number of the to-be-identified lamp beads, the identification status of the lamp beads in the current segment can be judged quickly and accurately, which provides clear guidance for subsequent matching strategies. The comparison method is not only simple and efficient, but also can promptly detect abnormal situations in the identification process, such as missing lamp beads or misidentification, thereby ensuring the accuracy and reliability of the entire identification process. Second, when the number of the identified lamp beads is the same as the number of the to-be-identified lamp beads, a one-to-one correspondence is directly established between the spatial positions and sequence numbers of the lamp beads. The method is simple and direct, and can quickly complete the matching task, thereby improving the processing efficiency of the entire system. Additionally, when the number of the identified lamp beads is less than the number of the to-be-identified lamp beads, the spatial positions of missing lamp beads are inferred by calculating the average interval between the identified lamp beads. The inference method based on known information can not only effectively solve the problem that some lamp beads cannot be directly identified, but also obtain accurate lamp bead layout information under imperfect imaging conditions, thereby enhancing the robustness of the system. Finally, when the number of the identified lamp beads exceeds the number of the to-be-identified lamp beads, redundant lamp beads are excluded by analyzing the common features of the same segment. The method can effectively identify and exclude misidentified or repeatedly identified lamp beads, thereby ensuring the accuracy and completeness of the matching result. As can be seen, the comprehensive technical advantages achieved by this application through the above embodiments are not only improving the efficiency and accuracy of matching between the positions and sequence numbers of lamp beads but also enhancing the robustness and adaptability of the system, which provides strong technical support for the development and application of intelligent lamp chain products.

Based on any embodiment of the method in this application, said inferring the spatial positions of missing lamp beads in the segment according to an average interval of all adjacent lamp beads that have been matched comprises:

Step S5441: calculating an average interval between adjacent lamp beads according to straight-line distances between the spatial positions of the adjacent lamp beads that have consecutive sequence numbers and have been matched in the captured image;
To infer the spatial positions of missing lamp beads in a segment in the captured image, it is first necessary to calculate the average interval between adjacent lamp beads that have consecutive sequence numbers and have been matched. This can be done based on the lamp beads with known spatial positions in the captured image by measuring the straight-line distances therebetween. Specifically, adjacent lamp beads with consecutive sequence numbers refer to lamp beads that are adjacent to each other in the lamp chain and have their spatial positions and sequence numbers determined. For example, if the sequence numbers of the lamp beads are 1, 2, 3 ..., then the lamp beads with sequence numbers 1 and 2, those with sequence numbers 2 and 3, and the like constitute consecutive adjacent lamp bead pairs.

For these adjacent lamp bead pairs, by measuring the straight-line distances between the spatial positions thereof in the captured image, a series of straight-line distance data can be obtained. The straight-line distance data reflects the actual intervals between adjacent lamp beads. Next, statistical analysis of the distance data is carried out, and the average value of these straight-line distances is calculated, so as to obtain the average interval. The purpose of calculating the average interval is to obtain a reference value that represents the average distance that should be maintained between adjacent lamp beads under normal conditions.

Step S5442: applying linear fitting to the lamp beads that have their spatial positions determined in a corresponding segment, to determine a linear distribution relationship of the lamp beads;
To determine the spatial positions of missing lamp beads in a segment in the captured image, linear fitting can be applied to the lamp beads that have their spatial positions determined in the segment, so as to determine the linear distribution relationship of the lamp beads. The step is based on the assumption that in most cases, the distribution of lamp beads on the lamp chain is approximately linear. Even when the lamp chain is curved or arranged in a particular shape, the distribution of lamp beads in local regions can still be regarded as linear or approximately linear.

During implementation, the coordinate data of all the lamp beads with known spatial positions in the segment is first collected. Next, mathematical methods are used to apply linear fitting to the coordinate data. The purpose of linear fitting is to find such a straight line as to minimize the sum of distances from the coordinate points of all the lamp beads with known spatial positions to the straight line. This can be realized through mathematical optimization techniques such as the least squares method.

The result of linear fitting is an equation of a straight line, and the equation describes the linear distribution trend of the lamp beads in the captured image. The straight line can be regarded as the "skeleton" of the lamp bead distribution, and provides a reference framework for inferring the positions of missing lamp beads. Through the straight line, the due spatial position of a lamp bead can be predicted at any given sequence number position. For example, if the coordinates of two adjacent lamp beads are known as (x1, y1) and (x2, y2), linear fitting can give an equation of a straight line $y = mx + b$, wherein m is the slope and b is the intercept. By using the equation, the corresponding y-coordinate can be calculated when x-coordinate is any value, so as to determine the position of the lamp bead.

Additionally, linear fitting can also help identify and correct abnormal data caused by imaging errors, lamp bead damage, or the like. If the position of a certain lamp bead significantly deviates from the straight line obtained by linear fitting, then the data of the lamp bead can be inaccurate and require further verification or correction.

Step S5443: determining the spatial positions of the missing lamp beads in the segment in the captured image according to the linear distribution relationship in combination with the average interval.

On basis of the equation reflecting a linear distribution relationship, in combination with the previously calculated average interval, the positions of missing lamp beads can be further determined precisely. If it is known that there should be a lamp bead at a certain position, but it is not detected in the actual image, it can be judged by checking whether the distance between the lamp beads before and after this position is close to twice the average interval. If so, one lamp bead is probably missing at this position. For example, if the average interval is 10 pixels, and the distance between two known lamp beads is 28 pixels, one lamp bead is probably missing between these two known lamp beads, and the spatial position of the missing lamp bead can be determined at the midpoint of these two known lamp beads.

Furthermore, if the linear distribution relationship indicates that the lamp beads should be uniformly distributed, but the interval of lamp beads in a certain region is significantly larger than the average interval, it can also be inferred that there are missing lamp beads in the region. By calculating how many lamp beads should be in the region, the specific position of each missing lamp bead can be further determined. For example, if the length of a region is 100 pixels and the average interval is 10 pixels, then there should be 10 lamp beads in the region. If only 6 are actually detected, it can be inferred that 4 lamp beads are missing, and based on the same principle for finding missing lamp beads, the spatial positions thereof can be determined according to the linear distribution relationship and the average interval.

By executing the above embodiments, the comprehensive technical advantages achieved by this application are mainly reflected in the following aspects. First, by calculating the average interval between adjacent lamp beads that have consecutive sequence numbers and have been matched, the distribution features of the lamp beads on the lamp chain can be precisely described based on the lamp beads with known spatial positions in the captured image. Second, by using linear fitting to determine the linear distribution relationship of the lamp beads, the approximately linear distribution of lamp beads on the lamp chain can be processed effectively. Even when the lamp chain is curved or arranged in a particular shape, the positions of the lamp beads can be predicted accurately. Finally, by combining the linear distribution relationship with the average interval to determine the spatial positions of missing lamp beads, the complete distribution of the lamp beads can be reconstructed accurately. This not only improves the accuracy and completeness in detecting positions of lamp beads, but also enhances robustness to incomplete or damaged data. In this way, this application can effectively utilize the existing lamp bead position information and statistical analysis results to infer the positions of missing lamp beads, thereby achieving complete reconstruction of lamp bead positions and providing solid technical support for precise control and layout planning of intelligent lamp chain products.

Based on any embodiment of the method in this application, said excluding redundant lamp beads from the segment in the captured image according to common features of the same segment comprises:

> Step S5451: calculating an average interval and a standard deviation of lamp bead pairs that have consecutive sequence numbers and have been matched according to straight-line distances therebetween;
> To exclude redundant lamp beads from a certain segment in the captured image, it is first necessary to calculate the straight-line distances between lamp bead pairs that have consecutive sequence numbers and have been matched, and based on this, calculate the average interval and standard deviation, so as to determine a reasonable deviation threshold by analyzing the distance distribution of the lamp beads known to be matched, and further identify and exclude those lamp beads in non-conformity with the distribution.

Specifically, lamp bead pairs with consecutive sequence numbers refer to lamp beads that are adjacent to each other in the lamp chain and have their spatial positions and sequence numbers determined. For example, if the sequence numbers of the lamp beads are 1, 2, 3 ..., then lamp beads with sequence numbers 1 and 2, lamp beads with sequence numbers 2 and 3, and the like constitute consecutive lamp bead pairs. For these pairs, by measuring the distances between the spatial positions thereof in the captured image, a series of straight-line distance data can be obtained.

Next, statistical analysis of these straight-line distance data is carried out, and the average value (average interval) and standard deviation thereof are calculated. The average interval reflects the average level of the distances between the lamp bead pairs, while the standard deviation indicates the dispersion degree of the distance data, and is determined according to the difference between each straight-line distance and the average interval. The smaller the standard deviation, the more concentrated the straight-line distance data, and the more uniform the distribution of the lamp beads; conversely, the larger the standard deviation, the more dispersed the straight-line distance data, and the more uneven the distribution of the lamp beads.

Step S5452: using the average interval superimposed with at least one standard deviation as a deviation threshold value to serve as a common feature of the same segment, iterating over all light-bead pairs within the segment and detecting whether a straight-line distance between any lamp bead pairs exceeds the deviation threshold value, and if not, marking a corresponding lamp bead pair as a trusted pair;

To exclude redundant lamp beads from a segment in the captured image, it is necessary to use the calculated average interval and standard deviation to set a deviation threshold. The deviation threshold can be used as a common feature of the same segment to identify and exclude lamp beads in non-conformity with the normal distribution.

During implementation, at least one standard deviation is added to the average interval. For example, two standard deviations can be added to the average interval, and the obtained value can be used as the deviation threshold. The setting of the threshold is based on statistical principles, and aims to encompass most of the distance data in conformity with normal distribution while screening out the data that significantly deviates from the normal range. For example, if the calculated average interval is 50 pixels and the standard deviation is 5 pixels, then the deviation threshold can be set to 50 + 5*2 = 60 pixels. The threshold means that if the straight-line distance between any two lamp beads exceeds 55 pixels, the distance between this pair of lamp beads is considered abnormal, and there may exist redundant lamp beads.

Next, all light-bead pairs in the segment are iterated over and the straight-line distances between any lamp bead pair are detected. For each pair of lamp beads, the straight-line distance therebetween is calculated and compared with the deviation threshold. If the straight-line distance between a certain pair of lamp beads does not exceed the deviation threshold, then this pair of lamp beads is considered credible and marked as a trusted pair. Then, the lamp beads that are never included in the trusted pairs will naturally be determined as suspicious pairs. The process ensures that only those lamp bead pairs in conformity with the normal distribution are retained, which provides a reliable data foundation for further analysis and matching.

Step S5453: after the iterating, excluding all redundant lamp beads that are not included in trusted pairs in the segment in the captured image, and retaining lamp beads that belong to a trusted pair.

After completion of the comparison between the straight-line distances of the lamp bead pairs in the captured image and the deviation threshold, the lamp bead data in the captured image can be cleaned to ensure that only those lamp beads in conformity with the preset statistical feature are retained, and based on this, inaccurate data generated for various reasons (such as reflection, double image, or misidentification) is removed.

In specific operation, the previously marked trusted pairs are first reviewed. These pairs are deemed reliable since the straight-line distances therebetween do not exceed the preset deviation threshold. After the trusted pairs are confirmed, the lamp beads in the entire segment in the captured image are examined. Any lamp bead that is not included in the trusted pairs is considered redundant or misidentified. The lamp beads may not be correctly identified due to poor imaging conditions, lamp bead damage, occlusion, or other interference factors. To ensure the purity of data, these redundant lamp beads will be excluded from the dataset.

After completion of the exclusion operation, the remaining lamp beads are the verified lamp beads in conformity with the preset statistical feature. Not only are these lamp beads accurate in spatial position, but also the distribution thereof conforms to the expected pattern. The step ensures the quality of data for subsequent processing and analysis, which provides a solid foundation for the precise matching between the positions and sequence numbers of the lamp beads.

By executing the above embodiments, the comprehensive technical advantages achieved by this application are mainly reflected in the following aspects. First, by accurately calculating the average interval and standard deviation of the straight-line distances between the matched lamp bead pairs, a reliable statistical model can be established on the basis of actual data, so as to accurately describe the distribution feature of the lamp beads in the captured image. Second, by using the deviation threshold set by the average interval and the standard deviation as a common feature of the same segment, lamp beads in normally distribution can be effectively distinguished from abnormal lamp beads.

By comparing the straight-line distance between each pair of lamp beads with the deviation threshold, lamp bead pairs in non-conformity with the normal distribution can be quickly identified and then marked as untrusted pairs. Finally, by excluding redundant lamp beads that are not included in the trusted pairs, the data in the captured image can be cleaned, so as to ensure that only lamp beads in conformity with the preset statistical feature are retained. This not only improves the purity of the data, but also provides high-quality data support for subsequent matching between the positions and sequence numbers of lamp beads. In this way, this application can effectively improve the accuracy and reliability in identifying lamp beads, and also reduce matching errors caused by misidentification or interference factors, thereby providing solid technical support for precise control and layout planning of intelligent lamp chain products.

Based on any embodiment of the method in this application, said excluding redundant lamp beads from the segment in the captured image according to common features of the same segment comprises:

Step S5454: determining an average color value of a region image of each lamp bead that has its spatial position determined in the segment in the captured image;

To exclude redundant lamp beads from a certain segment in the captured image, it is first necessary to determine the average color value of the region image of each lamp bead that has its spatial position determined in the segment in the captured image. In this way, the color feature of each lamp bead is obtained, so as to identify and exclude abnormal lamp beads through the color consistency subsequently.

Specifically, each lamp bead occupies a certain region in the captured image, and the pixel set in the region constitutes the region image of the lamp bead. The region image can be determined by the selection box that is output by image analysis techniques such as an OpenCV library functions or an image target identification model as revealed above. By averaging the color values of all the pixels in the region image, the average color value of the lamp bead can be obtained. The color value is usually represented by a RGB (Red, Green, Blue) color model, thus the average color value of individual lamp beads is also an RGB value. For example, if the average value of the red component of all the pixels in the region image of a lamp bead is 120, the average value of the green component is 150, and the average value of the blue component is 200, then the average color value of the lamp bead is (120, 150, 200).

Step S5455: averaging the average color value of individual lamp beads to obtain a re-averaged value, and determining an absolute error between each average color value and the re-averaged value as a common feature of the same segment;

Next, the average color value of individual lamp beads is averaged to obtain a re-average value. The re-average value represents the average color feature of all the lamp beads in the segment. Then, the absolute error is calculated between the average color value of individual lamp beads and the re-average value. The absolute error reflects the degree of deviation of the color of each lamp bead from the overall average color. For example, if the re-average value is (130, 160, 210) and the average color value of a certain lamp bead is (120, 150, 200), then the absolute error of the lamp bead is $|120-130| + |150-160| + |200-210| = 30$.

Step S5456: according to the number of lamp beads as defined by the sequence number range of the segment, retaining lamp beads with the smallest absolute error as valid lamp beads, and excluding other lamp beads in the captured image.

After determining the absolute error between the average color value of individual lamp beads and the re-average value, the next step is to retain valid lamp beads according to these error values, while excluding the remaining lamp beads in the captured image. The process is based on the assumption that since the same segment uses the same apparent color to control the lamp beads to emit light, the lamp beads in the same segment should be consistent in color under normal circumstances, hence the average color values thereof should be close to the re-average value. Those lamp beads that suffer from significant deviation from the re-average value may be abnormal lamp beads caused by imaging errors, lamp bead damage, or other interference factors.

In specific operation, the number of valid lamp beads that need to be retained is first determined according to the number of lamp beads defined by the sequence number range of the segment. For example, if the sequence number range of a segment is 1 to 10, then the segment should theoretically comprise 10 lamp beads. Next, the absolute errors of all the lamp beads that have their spatial positions determined in the segment are sorted. The top 10 lamp beads with the smallest absolute errors are selected as valid lamp beads, since these lamp beads are in colors closest to the overall average color, and are therefore most likely to be the correct lamp beads. The remaining lamp beads are considered redundant or misidentified lamp beads and excluded from the dataset.

By executing the above embodiments, the comprehensive technical advantages achieved by this application are mainly reflected in the following aspects. First, by accurately calculating the average color value of the region image of each lamp bead in the captured image, the color feature of each lamp bead can be obtained according to the actual image data. Second, by using the average color value of individual lamp beads to calculate the re-average value and determining the absolute error between each average color value and the re-average value, lamp beads in abnormal colors can be identified effectively. In this way, color deviation caused by imaging errors, lamp bead damage, or other interference factors can be identified quickly, so as to ensure that the retained lamp bead data is highly consistent and reliable. Finally, by retaining the lamp beads with the smallest absolute errors as valid lamp beads and excluding the remaining lamp beads, the data in the captured image can be cleaned, and it can be ensured that only lamp beads in conformity with the preset color feature are retained. In this way, this application can effectively improve the accuracy and reliability in identifying lamp beads, and reduce matching errors caused by misidentification or interference factors, thereby providing solid technical support for the precise control and layout planning of intelligent lamp chain products.

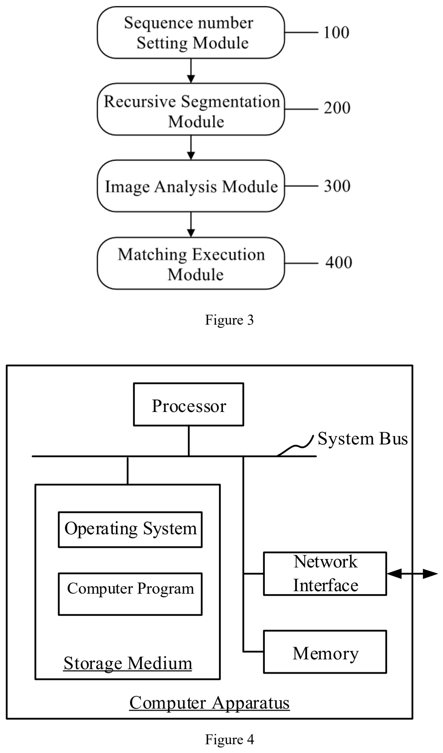

Referring to FIG. 3, in another embodiment of this application, there is further provided a lamp bead position detection device, which comprises a sequence number setting module 100, a recursive segmentation module 200, an image analysis module 300, and a matching execution module 400. Wherein, the sequence number setting module 100 is configured to sort lamp beads according to the total number of the lamp beads in a lamp chain and determine a sequence number of each lamp bead; the recursive segmentation module 200 is configured to apply recursive segmentation to the lamp chain according to the sequence number to obtain sequence number ranges of lamp beads correspondingly covered by a plurality of segments, and after each segmentation, control each segment obtained from the current segmentation to present a different apparent color through the lamp beads from other segments; the image analysis module 300 is configured to identify spatial positions and apparent colors of light-emitting lamp beads in a captured image of the lamp chain as correspondingly captured in each segmentation, and determine sequence number ranges to which the light-emitting lamp beads in the image belong according to the segment to which the apparent colors belong; the matching execution module 5400 is configured to determine a mapping relationship between a spatial position and the sequence number of each lamp bead according to a spatial positional relationship between adjacent lamp beads in the captured image and a sequence number relationship therebetween within the sequence number ranges to which they belong.

Referring to FIG. 4, in another embodiment of this application, there is further provided a computer apparatus. The computer apparatus can serve as a controller in an ambient lamp apparatus. As shown in FIG. 4, it is an internal structure diagram of the computer apparatus. The computer apparatus comprises a processor, a computer-readable storage medium, a memory, and a network interface, which are connected via a system bus. An operating system, a database, and a computer program encapsulating computer-readable instructions can be stored in the computer-readable storage medium of the computer apparatus; control information sequences can be stored in the database; when the computer-readable instructions are executed by the processor, they can cause the processor to implement a lamp bead position detection method. The processor of the computer apparatus is used to provide computing and control capabilities, so as to support the operation of the entire computer apparatus. The computer-readable instructions can be stored in the memory of the computer apparatus; when these computer-readable instructions are executed by the processor, they can cause the processor to execute the lamp bead position detection method of this application. The network interface of the computer apparatus is used for connection and communication with terminals. Persons skilled in the art can understand that the structure shown in FIG. 4 is only a block diagram of a partial structure related to the solution of this application, and does not constitute a limitation on the computer apparatus to which the solution of this application is applied. A specific computer apparatus can comprise more or fewer components than those shown in the figure, or have certain components assembled, or differ in the arrangement of components.

In the present implementation, the processor is used to execute the specific functions of each module and sub-modules thereof in FIG. 3, and program codes and various kinds of data required for executing the above modules or sub-modules are stored in the memory. The network interface is used for data transmission to a user terminal or between servers. The program codes and data required for executing all the modules/sub-modules in the lamp bead position detection device of this application are stored in the memory in the present implementation. The server can call the program codes and data of the server to execute the functions of all the sub-modules.

The present application further provides a storage medium where computer-readable instructions are stored. When the computer-readable instructions are executed by one or more processors, they cause said one or more processors to execute the steps of the lamp bead position detection method according to any embodiment of this application.

The present application further provides a computer program product, comprising computer programs/instructions. When the computer programs/instructions are executed by one or more processors, they implement the lamp bead position detection method according to any embodiment of this application.

Persons skilled in the art can understand that all or some of the procedures in the methods of the above embodiments of this application can be realized as computer programs instruct relevant hardware to do so. The computer programs can be stored in a computer-readable storage medium. When the programs are executed, the procedures of the embodiments of the above-mentioned methods can be included. Wherein, the storage medium can be a computer-readable storage medium, such as magnetic disks, optical discs, and Read-Only Memory (ROM), or Random Access Memory (RAM), etc.

**Claims**

1. A lamp bead position detection method, comprising:

sorting lamp beads (20) according to the total number of the lamp beads in a lamp chain (2), and determining a sequence number of each lamp bead;
applying recursive segmentation to the lamp chain (2) according to the sequence number to obtain sequence number ranges of lamp beads (20) correspondingly covered by multiple segments, and after each segmentation, controlling each segment obtained from the current segmentation to present a different apparent color through the lamp beads from other segments;
identifying spatial positions and apparent colors of light-emitting lamp beads in a captured image of the lamp chain (2) as correspondingly acquired in each segmentation, and determining sequence number ranges to which the light-emitting lamp beads in the image belong according to the segment to which the apparent colors belong; and
determining a mapping relationship between a spatial position and the sequence number of each lamp bead (20) according to a spatial positional relationship between adjacent lamp beads in the captured image and a sequence number relationship within the sequence number ranges to which they belong.

2. The lamp bead position detection method according to claim 1, wherein said applying recursive segmentation to the lamp chain (2) according to the sequence number to obtain sequence number ranges of lamp beads (20) correspondingly covered by multiple segments, and after each segmentation, controlling each segment obtained from the current segmentation to present a different apparent color through the lamp beads from other segments comprises:

dividing lamp beads of a target segment in the lamp chain into multiple segments according to the sequence number, and assigning a distinct apparent color to each segment;
according to the apparent color of each segment obtained from the current division, controlling each lamp bead of a corresponding segment in the lamp chain to emit an apparent color assigned to the segment for capturing the captured image; and
detecting whether each segment obtained from the current segmentation meets a preset termination condition, and if not, taking the current segment currently under detection as a next target segment and iterating the above process to continue the recursive segmentation, wherein the termination condition is that either all lamp beads in the current segment are suitable for determining the spatial positions and sequence numbers thereof to realize correspondence matching, or the number of lamp beads in the current segment is less than or equal to two.

3. The lamp bead position detection method according to claim 2, wherein before said dividing lamp beads of a target segment in the lamp chain into multiple segments according to the sequence number, the method comprises:

grouping the sequence numbers of the lamp beads in the lamp string according to a preset interval rule, to obtain a sequence number set that correspond to each group; and
for each group, launching a corresponding thread configured to receive the sequence number set of lamp beads in each group and the interval rule, the thread taking a corresponding group as the target segment, and applying recursive segmentation to the target segment.

4. The lamp bead position detection method according to claim 1, wherein said identifying spatial positions and apparent colors of light-emitting lamp beads in a captured image of the lamp string (2) correspondingly acquired for each segmentation, and determining sequence number ranges to which the light-emitting lamp beads in the image belong according to the segment to which the apparent colors belong comprises:

using an imaging unit (3) to acquire the captured image of the lamp string at different segmentation stages, wherein lamp beads of each segment in the captured image display an apparent color assigned to the segment;
identifying, from the captured image, the spatial position of each light-emitting lamp bead in the captured image and the apparent color displayed thereby; and
according to the apparent colors of the light-emitting lamp beads in the captured image, classifying each light-emitting lamp bead into a corresponding segment, and determining that the sequence number of the light-emitting lamp bead belongs to a sequence number range of the segment.

5. The lamp bead position detection method according to claim 1, wherein said determining a mapping relationship between a spatial position and the sequence number of each lamp bead (20) according to a spatial positional relationship between adjacent lamp beads in the captured image and a sequence number relationship within the sequence number ranges to which they belong comprises:

for each segment where the number of lamp beads is less than or equal to two, inferring the sequence numbers of the lamp beads and the spatial positions thereof in the captured image according to the sequence number relationship and the spatial positional relationship between the lamp beads and adjacent segments of the segment.

6. The lamp bead position detection method according to any one of claims 1 to 5, wherein said determining a mapping relationship between a spatial position and the sequence number of each lamp bead (20) according to a spatial positional relationship between adjacent lamp beads in the captured image and a sequence number relationship within the sequence number ranges to which they belong comprises:

for each segment, comparing the number of identified lamp beads that have their spatial positions determined in the captured image of the segment with the number of lamp beads that remain to be identified in the segment, and obtaining a comparison result;
when the comparison result shows that the number of the identified lamp beads equals the number of the to-be-identified lamp beads, establishing a one-to-one correspondence between the spatial position of each lamp bead that belongs to the segment in the captured image and each sequence number within a sequence number range of the segment.

7. The lamp bead position detection method according to any one of claims 1 to 5, wherein said determining a mapping relationship between a spatial position and the sequence number of each lamp bead (20) according to a spatial positional relationship between adjacent lamp beads in the captured image and a sequence number relationship within the sequence number ranges to which they belong comprises:

for each segment, comparing the number of identified lamp beads that have their spatial positions determined in the captured image of the segment with the number of lamp beads that remain to be identified in the segment, and obtaining a comparison result;
when the comparison result shows that the number of the identified lamp beads is less than the number of the to-be-identified lamp beads by a difference that does not exceed a preset threshold value, inferring the spatial positions of missing lamp beads in the segment according to an average interval of all the already matched adjacent lamp beads, and establishing a one-to-one correspondence between the spatial position of each lamp bead that belongs to the segment in the captured image and each sequence number within the sequence number range of the segment.

8. The lamp bead position detection method according to any one of claims 1 to 5, wherein said determining a mapping relationship between a spatial position and the sequence number of each lamp bead (20) according to a spatial positional relationship between adjacent lamp beads in the captured image and a sequence number relationship within the sequence number ranges to which they belong comprises:

for each segment, comparing the number of identified lamp beads that have their spatial positions determined in the captured image of the segment with the number of lamp beads that remain to be identified in the segment, and obtaining a comparison result;
when the comparison result shows that the number of the identified lamp beads is greater than the number of the to-be-identified lamp beads, excluding redundant lamp beads from the segment in the captured image according to common features of the same segment, and establishing a one-to-one correspondence between the spatial position of each lamp bead that belongs to the segment in the captured image and each sequence number within the sequence number range of the segment.

9. The lamp bead position detection method according to claim 7, wherein said inferring the spatial positions of missing lamp beads in the segment according to an average interval of all the already matched adjacent lamp beads comprises:

calculating an average interval between adjacent lamp beads according to straight-line distances between the spatial positions of the adjacent lamp beads that have consecutive sequence numbers and have been matched in the captured image;
applying linear fitting to the lamp beads that have their spatial positions determined in a corresponding segment, to determine a linear distribution relationship of the lamp beads; and
determining the spatial positions of the missing lamp beads in the segment in the captured image, according to the linear distribution relationship in combination with the average interval.

10. The lamp bead position detection method according to claim 8, wherein said excluding redundant lamp beads from the segment in the captured image according to common features of the same segment comprises:

calculating an average interval and a standard deviation of lamp bead pairs that have consecutive sequence numbers and have been matched according to straight-line distances therebetween;
using the average interval superimposed with at least one standard deviation as a deviation threshold value to serve as a common feature of the same segment, iterating over all light-bead pairs within the segment and detecting whether a straight-line distance between any lamp bead pairs exceeds the deviation threshold value, and if not, marking a corresponding lamp bead pair as a trusted pair; and
after the iterating, excluding all redundant lamp beads that are not included in trusted pairs in the segment in the captured image, and retaining lamp beads that belong to a trusted pair.

11. The lamp bead position detection method according to claim 8, wherein said excluding redundant lamp beads from the segment in the captured image according to common features of the same segment comprises:

determining an average color value of a region image of each lamp bead that has its spatial position determined in the segment in the captured image;
averaging the average color value of individual lamp beads to obtain a re-averaged value, and determining an absolute error between each average color value and the re-averaged value as a common feature of the same segment; and according to the number of lamp beads as defined by the sequence number range of the segment, retaining lamp beads with the smallest absolute error as valid lamp beads, and excluding other lamp beads in the captured image.

12. A computer apparatus, comprising a central processing unit and a memory, wherein the central processing unit is configured to call and run computer programs stored in the memory to execute steps of the method according to any one of claims 1 to 11.

13. A computer program product, comprising computer programs or computer instructions, wherein when the computer programs or the computer instructions are called and run by a central processing unit, steps of the method according to any one of claims 1 to 11 are executed.

2

1

Controller

3

Imaging
Unit

20

Figure 1

| | |
|---|---|
| sorting lamp beads according to the total number of the lamp beads in a lamp chain, and determining a sequence number of each lamp bead | S5100 |

| | |
|---|---|
| applying recursive segmentation to the lamp chain according to the sequence number to obtain sequence number ranges of lamp beads correspondingly covered by multiple segments, and after each segmentation, controlling each segment obtained from the current segmentation to present a different apparent color through the lamp beads from other segments | S5200 |

| | |
|---|---|
| identifying spatial positions and apparent colors of light-emitting lamp beads in a captured image of the lamp chain as correspondingly acquired in each segmentation, and determining sequence number ranges to which the light-emitting lamp beads in the image belong according to belonging segments of the apparent colors | S5300 |

| | |
|---|---|
| determining a mapping relationship between a spatial position and the sequence number of each lamp bead according to a spatial positional relationship between adjacent lamp beads in the captured image and a sequence number relationship therebetween within the sequence number ranges to which they belong | S5400 |

Figure 2

Sequence number Setting Module — 100

↓

Recursive Segmentation Module — 200

↓

Image Analysis Module — 300

↓

Matching Execution Module — 400

Figure 3

Processor

System Bus

Operating System

Computer Program

Network Interface

Storage Medium

Memory

Computer Apparatus

Figure 4

Europäisches
Patentamt
European
Patent Office
Office européen
des brevets

# EUROPEAN SEARCH REPORT

**Application Number**

EP 25 22 6874

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 111 612 839 A (UNIV GUANGZHOU) 1 September 2020 (2020-09-01) * paragraphs [0007],[0083]-[0087] and [0090]; figure 1 * ----- | 1-13 | INV. H05B45/22 H05B47/175 G06V20/60 |
| A | US 2017/094745 A1 (LAI CHENG-CHANG [TW]) 30 March 2017 (2017-03-30) * paragraph [0024] - paragraph [0029]; figure 3 * ----- | 1-13 | ADD. G06V10/00 |
| A | CN 119 325 168 A (SHENZHEN HAIYI ZHIXIN TECH CO LTD) 17 January 2025 (2025-01-17) * paragraphs [0137], [0191], [0218] - [0219], [0231]; figure 3B * ----- | 1-13 | |

| | |
|---|---|
| | TECHNICAL FIELDS SEARCHED (IPC) |
| | H05B G06F G06V |

The present search report has been drawn up for all claims

| Place of search | Date of completion of the search | Examiner |
|---|---|---|
| Munich | 19 June 2026 | Erskine, Andrew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

**EP 4 783 744 A1**

## ANNEX TO THE EUROPEAN SEARCH REPORT
## ON EUROPEAN PATENT APPLICATION NO.

EP 25 22 6874

19-06-2026

| Patent document cited in search report | | Publication date | Patent family member(s) | | Publication date |
|---|---|---|---|---|---|
| CN 111612839 | A | 01-09-2020 | NONE | | |
| US 2017094745 | A1 | 30-03-2017 | CN | 105307326 A | 03-02-2016 |
| | | | EP | 3174371 A1 | 31-05-2017 |
| | | | ES | 2793648 T3 | 16-11-2020 |
| | | | US | 2017094745 A1 | 30-03-2017 |
| CN 119325168 | A | 17-01-2025 | CN | 119325168 A | 17-01-2025 |
| | | | US | 2025071874 A1 | 27-02-2025 |

EPO FORM P0459